# FASCICULE DE BREVET EUROPEEN

(11) **EP 1 277 622 B1**
(45) Date de publication et mention de la délivrance du brevet: **20.02.2008**
(21) Numéro de dépôt: 02291794.2
(22) Date de dépôt: 16.07.2002
(51) Int. Cl.: B60R 19/18

(54) **Pare-chocs de véhicule automobile**
Kraftfahrzeugstossfänger
Vehicle bumper

(30) Priorité: 16.07.2001 FR 0109479
(43) Date de publication de la demande: 22.01.2003
(73) Titulaire: COMPAGNIE PLASTIC OMNIUM, 69007 Lyon (FR)
(72) Inventeur: Roussel, Thierry, 52500 Fayl La Foret (FR); Cavillon, Thierry, 01250 Jasseron (FR); Bouguedra, David, 01500 Amberieu en Bugey (FR)
(74) Mandataire: Remy, Vincent Noel Paul

(56) Documents cités:
- EP-A- 0 323 038
- DE-A- 19 750 978
- FR-A- 2 364 789
- FR-A- 2 750 936
- US-A- 4 652 032

## Description

La présente invention concerne une poutre de pare-chocs de véhicule automobile et un pare-chocs muni d'une telle poutre.

On sait que les poutres de pare-chocs des véhicules automobiles doivent présenter une certaine rigidité pour assurer une protection suffisante des passagers en cas d'accident.

Dans ce but, on a coutume de réaliser une poutre avec des matériaux résistants et notamment avec des matières plastiques renforcées de fibres comme des fibres de verre.

On connaît de FR 2 364 789 un exemple de poutre, sur laquelle est rapportée une peau de pare-chocs munie d'un absorbeur.

Pour améliorer encore la rigidité d'une poutre, on sait lui conférer une section transversale non rectiligne, à la fois pour augmenter sa section et pour former des coins qui s'opposent à la flexion de ladite poutre.

Ainsi, en choisissant convenablement la matière utilisée et la forme de sa section transversale, on peut assez efficacement atteindre un niveau de rigidité satisfaisant de la poutre.

Cependant, une telle poutre peut présenter une géométrie qui s'avère irréalisable par injection, ou réalisable de manière trop complexe.

C'est pourquoi le procédé de soufflage est parfois préféré au procédé d'injection.

Cependant, le moulage par injection est particulièrement intéressant au regard des critères de coût et de qualité, tant mécanique qu'esthétique, de la poutre obtenue. Celle-ci est en effet généralement plus précise, c'est-à-dire exactement dimensionnée et mieux finie si elle est réalisée par injection.

La difficulté qu'il y a à obtenir par injection des poutres de pare-chocs de géométrie relativement complexe présentant une bonne rigidité est un problème que la présente invention se propose de résoudre.

À cet effet, la présente invention a pour objet une poutre de pare-chocs de véhicule automobile, comprenant un élément longitudinal de base apte à s'étendre d'un point de fixation à un autre sur le véhicule, comportant au moins deux bords longitudinaux, et un élément supplémentaire, comportant également au moins deux bords longitudinaux les deux éléments étant aptes à s'emboîter l'un dans l'autre, caractérisée en ce que les deux éléments comprennent des moyens d'encliquetage assurant une liaison mécanique rigide entre des bords longitudinaux desdits deux éléments.

Grâce à cette liaison mécanique rigide, l'assemblage constitué par les deux éléments emboîtés présente une rigidité supérieure à celle de chacun des deux éléments pris isolément.

Dans un mode de réalisation préféré de l'invention, les moyens d'encliquetage sont constitués par des pattes chanfreinées solidaires d'un bord longitudinal de l'un des éléments, pattes qui pénètrent dans des orifices prévus sur un bord longitudinal de l'autre élément.

Les chanfreins sont de préférence configurés de manière que les pattes engagées dans les orifices ne puissent plus en être extraites. En d'autres termes, dans cette variante, l'encliquetage des deux éléments emboîtés est irréversible.

La poutre de pare-chocs selon l'invention est prévue pour être fixée par exemple sur des longerons d'un véhicule. À cet effet, elle comporte, sur l'élément longitudinal de base, des points de fixation auxdits longerons à chacune de ses extrémités.

Selon un premier mode de réalisation de l'invention, l'élément supplémentaire s'étend d'un point de fixation à l'autre et comporte ses propres points de fixation au véhicule.

Selon un autre mode de réalisation de l'invention, l'élément supplémentaire ne s'étend que sur une portion limitée de l'élément longitudinal de base.

Selon une caractéristique particulière de l'invention, l'un ou chacun des deux éléments peut comporter des nervures de renforcement.

De telles nervures sont réparties avec éventuellement une densité variable sur toute la longueur de chaque élément.

Par exemple, la densité des nervures est avantageusement plus élevée dans les régions des éléments se trouvant au droit des longerons.

De manière particulièrement avantageuse, l'un au moins des deux éléments est précontraint par son emboîtement avec l'autre élément, suivant une direction de précontrainte perpendiculaire à la direction prévue des chocs, de manière à caler les deux éléments l'un contre l'autre et empêcher la génération de vibrations.

Par exemple, si la configuration géométrique des deux éléments est telle qu'après emboîtement, l'un des éléments contient l'autre, alors l'élément externe, c'est-à-dire celui qui contient l'autre, peut être configuré de manière qu'au repos, il présente deux ailes latérales entre lesquelles l'élément interne vient s'emboîter, ces deux ailes laissant entre elles un espace légèrement inférieur à la dimension correspondante de l'élément interne de sorte que l'emboîtement provoque un écartement des deux ailes latérales et, ainsi, une mise en précontrainte de l'élément externe.

La poutre selon l'invention présente l'avantage de permettre une adaptation aisée de ses caractéristiques géométriques et mécaniques aux véhicules auxquels elle est destinée.

En effet, son adaptation mécanique peut être obtenue en choisissant un élément supplémentaire apportant un accroissement de rigidité dosé en fonction du poids et du niveau d'équipement du véhicule considéré.

L'élément complémentaire peut également permettre une adaptation de la poutre à une forme particulière de bouclier de pare-chocs. Dans ce cas, on peut réaliser des éléments longitudinaux de base standards, auxquels on ajoute des éléments supplémentaires configurés géométriquement de façon spécifique à chaque modèle de véhicule.

Dans un mode de réalisation particulier de l'invention, l'élément complémentaire remplit, en plus de la fonction d'accroître la rigidité de l'assemblage, une fonction spécifique d'absorption de chocs, comme par exemple l'absorption des chocs avec des piétons, désignés plus brièvement "chocs piétons".

Dans ce cas, il est avantageux, selon une variante particulière, de prévoir entre les deux éléments assemblés, un jeu dans la direction prévue des chocs pour permettre à l'élément supplémentaire de remplir sa fonction d'absorption des chocs piétons avant que l'élément longitudinal de base ne traite ce choc.

Dans un mode de réalisation particulier de l'invention, l'élément longitudinal de base présente une section en forme de W et l'élément supplémentaire présente une section en forme de U, l'élément complémentaire étant prévu pour coiffer l'élément longitudinal de base.

De manière plus générale, il est avantageux que l'élément longitudinal de base présente au moins une partie convexe et que l'élément supplémentaire présente au moins une partie concave apte à recevoir l'élément longitudinal de base ou au moins la partie convexe de celui-ci.

Dans une variante particulière, la poutre comporte des moyens mécaniques destinés à empêcher l'élément externe de s'écarter lorsque l'assemblage des éléments emboîtés est soumis à une contrainte externe, afin de garantir la bonne tenue mécanique dudit assemblage et le maintien de son inertie élevée résultant de l'emboîtement des deux éléments, même en cas de choc.

De tels moyens mécaniques sont par exemple une configuration géométrique des deux éléments dans laquelle les deux éléments sont alternativement élément interne et élément externe, considérés dans une section transversale de la poutre se déplaçant d'une extrémité à l'autre de cette dernière.

En effet, grâce à une telle configuration, l'élément interne qui est empêché de s'écarter par l'élément externe en une section donnée de la poutre devient à son tour l'élément interne qui est empêché de s'écarter par l'élément externe en une autre section de la poutre.

Plus généralement, si l'emboîtement des deux éléments est tel qu'aucun d'eux ne peut jamais être considéré comme externe ni comme interne, la configuration géométrique est telle que les positions relatives des deux éléments s'inversent au moins une fois entre deux sections transversales de la poutre.

Un autre avantage d'une telle configuration géométrique réside dans le fait qu'entre deux sections dans lesquelles les positions relatives des deux éléments s'inversent, l'un au moins des éléments comporte des parties de transition formant des portées d'appui transversal, qui constituent un moyen de centrage des deux éléments emboîtés l'un par rapport à l'autre.

Conformément à l'invention, chacun des deux éléments de la poutre peut être réalisé en un matériau quelconque. À titre d'exemple, on peut citer comme matériau utilisable selon l'invention, le polypropylène, et plus généralement toutes matières thermoplastiques pouvant être injectées, un alliage de matières plastiques ou un alliage métallique d'aluminium ou d'acier.

Le choix du matériau le plus approprié résulte bien entendu des caractéristiques mécaniques souhaitées de la poutre.

La présente invention a également pour objet un pare-chocs de véhicule automobile comportant une poutre de pare-chocs telle que décrite ci-dessus.

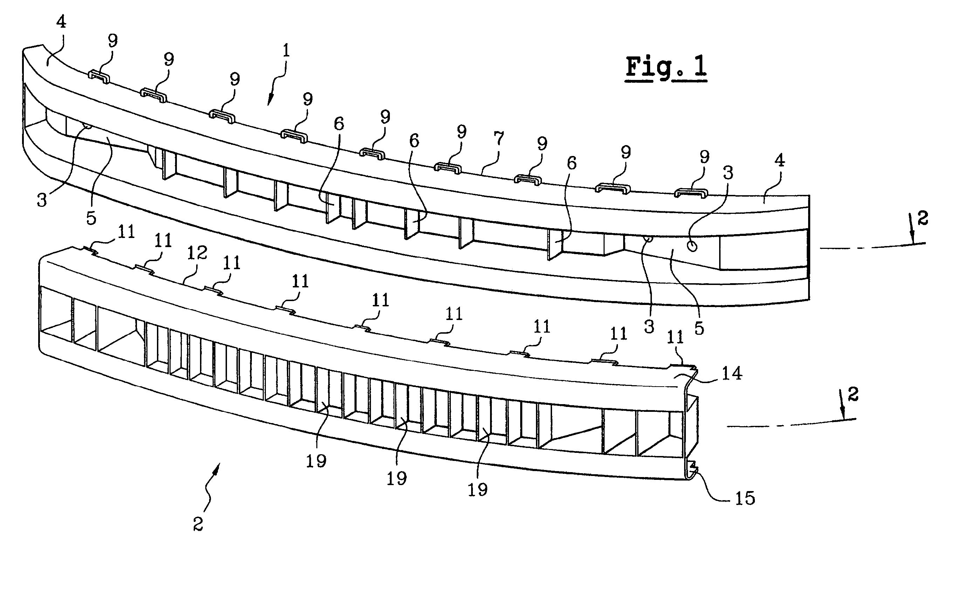

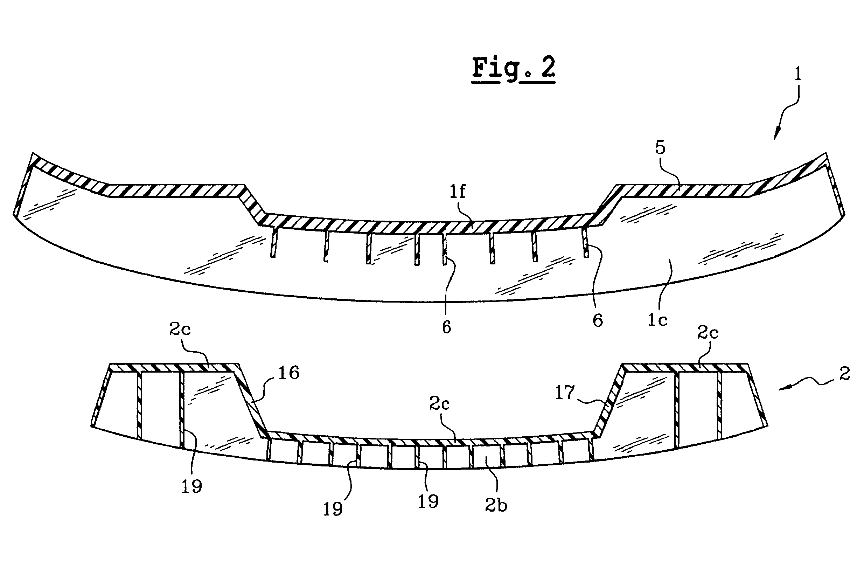

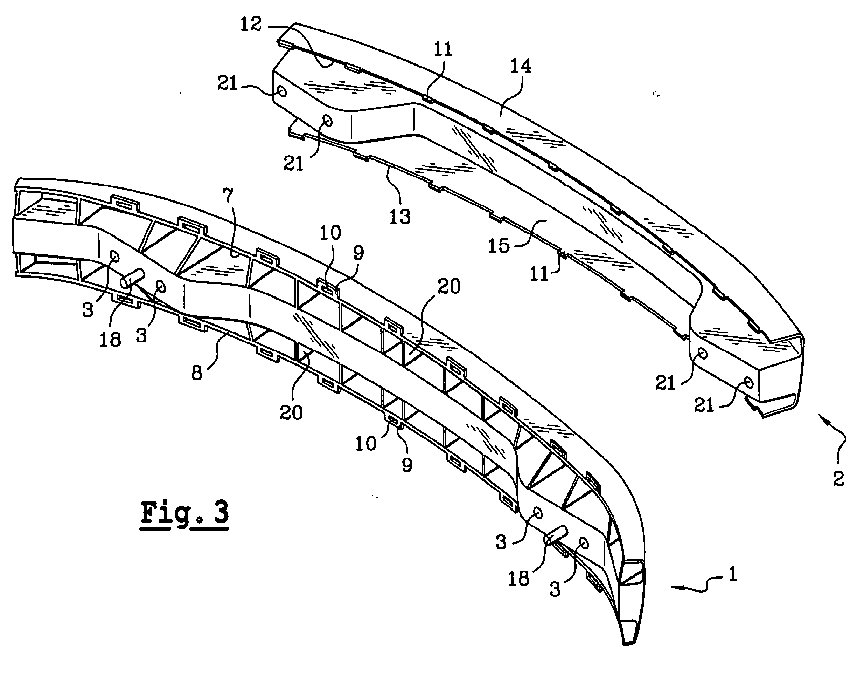

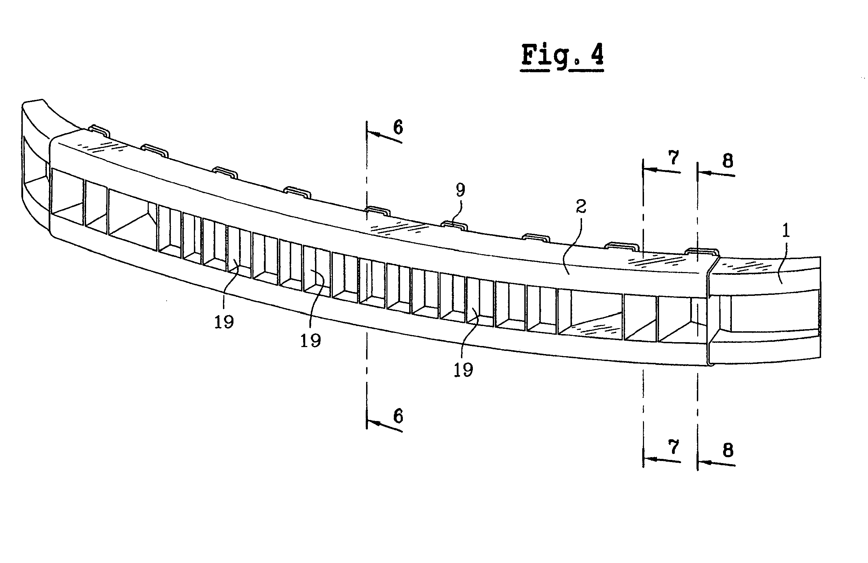

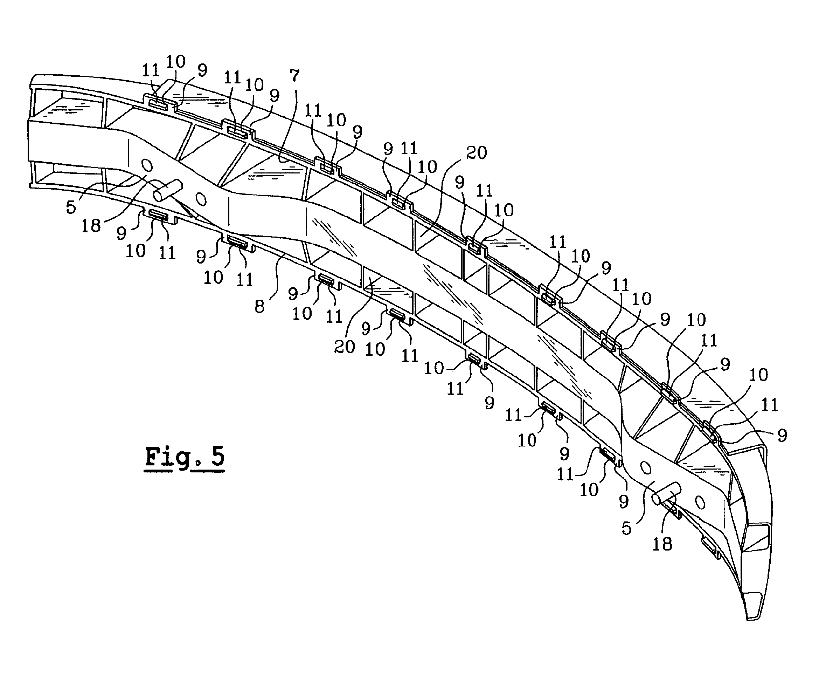

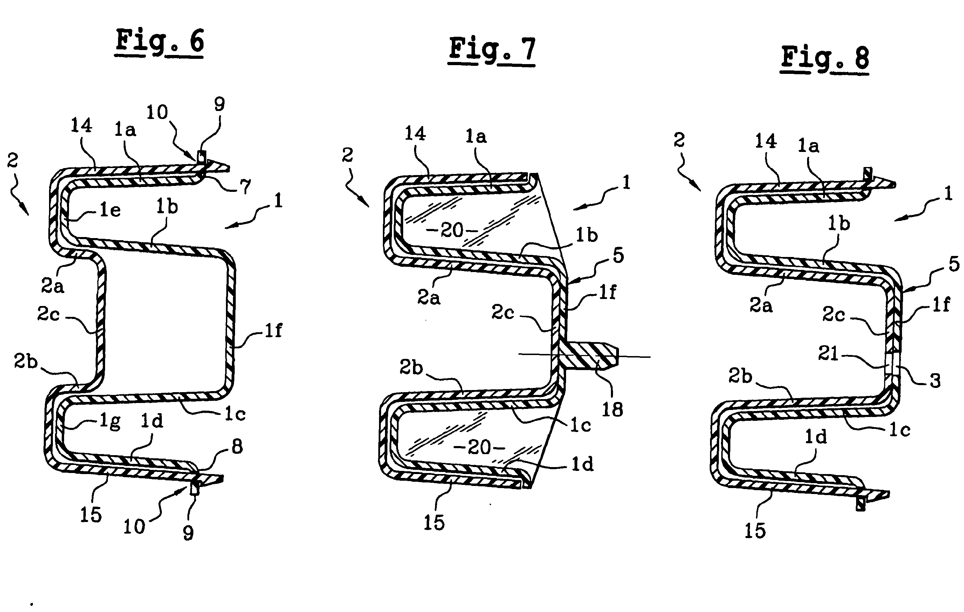

Afin de faciliter la compréhension de l'invention, on va en décrire maintenant un exemple sous la forme d'un mode de réalisation non limitatif illustré par les dessins annexés qui comprennent :
- une figure 1 qui est une vue en perspective avant de deux éléments constitutifs d'un assemblage selon l'invention avant emboîtement de l'un dans l'autre,
- une figure 2 qui est une vue en coupe selon 2 de la figure 1,
- une figure 3 qui est une vue en perspective arrière des deux éléments des figures 1 et 2,
- une figure 4 qui est une vue analogue à la figure 1 montrant les deux éléments emboîtés,
- une figure 5 qui est une vue analogue à la figure 3 montrant les deux éléments emboîtés,
- des figures 6 à 8 qui sont des sections prises selon les plans 6, 7 et 8 de la figure 4.

Sur la figure 1, on a représenté un élément longitudinal de base 1 et un élément supplémentaire 2, tous deux réalisés par injection de polypropylène.

L'élément longitudinal de base 1 couvre toute la largeur du véhicule en dépassant au-delà des points de fixation 3 de la poutre sur les longerons (non représentés) du véhicule par des crosses 4 assurant les chocs en coin.

Les points de fixation 3 consistent en des orifices ménagés dans une portion plane 5 dudit élément longitudinal de base 1, au droit des deux emplacements des longerons du véhicule.

Comme on le voit sur les sections des figures 6 à 8, l'élément longitudinal de base 1 présente une section en forme de W, de sorte qu'il comporte quatre plans 1a, 1b, 1c, 1d sensiblement horizontaux (en position d'utilisation de la poutre sur le véhicule) reliés par trois plans 1e, 1f, 1g sensiblement verticaux. Les plans horizontaux 1a, 1b, 1c, 1d sont convenablement orientés pour résister à des contraintes exercées sur la poutre suivant la direction longitudinale du véhicule (c'est-à-dire de la gauche vers la droite par rapport aux figures 6 à 8). En étant reliés par les plans verticaux 1e, 1f, 1g, les quatre plans horizontaux additionnent leurs rigidités et confèrent à l'élément longitudinal de base une rigidité relativement importante.

Dans sa région centrale, l'élément longitudinal de base 1 est muni de nervures 6 qui remplissent l'espace délimité par ses deux plans horizontaux intermédiaires 1b, 1c. La répartition et la densité des nervures 6 est laissée à l'appréciation de l'homme du métier qui saura la déterminer en fonction de la résistance mécanique souhaitée de l'élément longitudinal. Au sens de la présente invention, les nervures 6 constituent un moyen supplémentaire de rigidification de chaque élément constituant la poutre mais n'ont aucune influence sur l'effet d'emboîtement et les avantages qui en découlent entre les deux éléments 1 et 2.

Au droit de ses portions planes 5 correspondant aux emplacements des longerons, l'élément longitudinal de base ne comporte pas de nervures.

Enfin, le long de chacun de ses deux bords longitudinaux 7 et 8, l'élément longitudinal de base est muni de ponts 9 qui définissent des orifices 10 prévus pour coopérer avec des pattes encliquetables 11 formées en saillie des bords longitudinaux 12, 13 de l'autre élément, comme cela va être décrit.

L'élément supplémentaire 2 est une pièce plus courte que l'élément longitudinal de base 1, qui comporte deux ailes latérales 14, 15 dont les bords longitudinaux 12, 13 sont munis des pattes encliquetables 11 coopérant avec les orifices 10 de l'élément longitudinal de base 1.

Chacune des ailes 14, 15 constitue un plan horizontal (dans la position d'utilisation de la poutre) orienté de manière à résister à une contrainte dirigée selon la direction longitudinale du véhicule.

En partie médiane, l'élément supplémentaire comporte également deux plans horizontaux intermédiaires 2a, 2b réunis par un plan vertical 2c. Les plans 2a et 2b sont d'importance variable suivant la section considérée de la poutre.

De ce fait, comme le voit sur les sections des figures 6 à 8, l'élément supplémentaire présente une section qui n'est pas constante sur toute sa longueur.

En effet, dans sa région centrale, la section (visible en figure 6) dudit élément supplémentaire 2 est une section en U, compte tenu du fait que les plans horizontaux intermédiaires 2a, 2b sont réduits, tandis que dans ses régions d'extrémité, cette section (visible en figures 7 et 8) est une section en W.

Entre ces deux sections, l'élément supplémentaire comporte deux zones de transition 16, 17 (visibles en figure 2) du plan vertical 2c, dans lesquelles ledit plan vertical intermédiaire 2c se déplace progressivement du voisinage de la face avant de l'élément supplémentaire au voisinage de sa face arrière.

Ce plan vertical intermédiaire 2c est par conséquent incliné dans ses zones de transition 16,17 par rapport à la direction longitudinale de la poutre et constitue une portée d'appui possible pour les deux nervures 6 distales de la zone centrale de l'élément longitudinal de base. Par conséquent, les zones de transition 16, 17 assurent le centrage de l'élément supplémentaire sur l'élément longitudinal de base.

Ainsi que cela ressort clairement d'une comparaison des sections des figures 6 à 8, dans la région centrale de la poutre, l'élément supplémentaire 2 contient intégralement l'élément longitudinal de base 1 entre ses deux ailes latérales 14, 15, tandis que dans les régions d'extrémité de la poutre, au-delà des zones de transition 16 et 17, l'élément longitudinal de base contient à son tour les deux plans intermédiaires horizontaux 2a, 2b de l'élément supplémentaire entre ses deux plans 1b, 1c.

Grâce à cet agencement, les deux éléments emboîtés l'un dans l'autre s'empêchent mutuellement de s'écarter verticalement lorsqu'ils sont soumis à une contrainte résultant d'un choc.

On peut également relever un avantage de l'emboîtement obtenu en regard des portions planes 5, comme on le voit à la figure 8 : l'élément supplémentaire 2 est muni d'orifices 19 de fixation aux longerons qui coïncident exactement avec ceux 3 de l'élément longitudinal de base 1, de sorte qu'une seule vis de fixation (non représentée) suffit pour assujettir simultanément au véhicule les deux éléments de la poutre, à chacune de leurs extrémités. De plus, le positionnement des orifices au voisinage de la face arrière de la poutre facilite la mise en place de la vis et son serrage.

Enfin, dans cette section particulière située au droit des longerons, l'élément supplémentaire et l'élément longitudinal de base reconstituent un cône d'emboîtement qui améliore leur solidarisation.

En plus des caractéristiques précédemment décrites, les deux éléments constituant la poutre selon l'invention présentent des caractéristiques supplémentaires qui sont indépendantes de l'emboîtement desdits deux éléments.

C'est ainsi que l'élément longitudinal de base comporte des pions de centrage 18 sur la face arrière de ses portions planes 5 de fixation aux longerons.

De même, l'élément supplémentaire 2 est muni, sur sa face avant, de nervures 19 ménagées entre ses deux plans horizontaux 2a et 2b et son plan vertical intermédiaire 2c.

De plus, l'élément longitudinal de base 1 est muni de nervures sur sa face arrière, entre ses plans horizontaux 1a, 1b et 1c, 1d, comme on le voit notamment sur la section de la figure 7 et sur les figures 3 et 5.

Le mode de réalisation décrit ci-dessus n'est fourni qu'à titre d'exemple et n'implique aucune limitation de la portée de l'invention.

En particulier, on peut noter que le positionnement de l'élément supplémentaire en avant de l'élément longitudinal de base n'est qu'un exemple, et que son positionnement entre ledit élément longitudinal de base et les longerons du véhicule pourrait être envisagé, notamment dans le cas où l'élément supplémentaire est une pièce métallique de forme simple alors que l'élément longitudinal de base est une pièce plus complexe, dont la réalisation par injection de matière plastique est préférée du fait de cette forme complexe d'une part, pour assurer l'absorption de chocs piétons d'autre part.

## Revendications

1. Poutre de pare-chocs de véhicule automobile, comprenant un élément longitudinal de base (1) apte à s'étendre d'un point de fixation à un autre sur le véhicule, comportant au moins deux bords longitudinaux (7, 8), et un élément supplémentaire (2), comportant également au moins deux bords longitudinaux (12, 13), les deux éléments (1, 2) étant aptes à s'emboîter l'un dans l'autre, **caractérisé en ce que** les deux éléments comprennent des moyens d'encliquetage (9, 10, 11) assurant une liaison mécanique rigide entre les bords longitudinaux (7, 8, 12, 13) desdits deux éléments.

2. Poutre selon la revendication 1, **caractérisée en ce que** les moyens d'encliquetage sont constitués par des pattes chanfreinées (11) solidaires d'un bord longitudinal (12, 13) de l'un (2) des éléments, pattes qui pénètrent dans des orifices (10) prévus sur un bord longitudinal (7, 8) de l'autre (1) élément.

3. Poutre selon la revendication 1 ou 2, **caractérisée en ce qu**'elle comporte, sur l'élément longitudinal de base (1) et à chacune de ses extrémités, des points de fixation (5) aux longerons du véhicule.

4. Poutre selon la revendication 1, 2 ou 3, **caractérisée en ce que** l'élément supplémentaire s'étend d'un point de fixation (5) à l'autre et comporte ses propres points de fixation (21) au véhicule.

5. Poutre selon la revendication 1, 2, ou 3, **caractérisée en ce que** l'élément supplémentaire (2) ne s'étend que sur une portion limitée du premier élément.

6. Poutre selon la revendication 1, 2, 3 4 ou 5, **caractérisée en ce que** l'un ou chacun des deux éléments (1, 2) comporte des nervures de renforcement (6, 19, 20).

7. Poutre selon la revendication 1, 2, 3, 4, 5 ou 6, **caractérisée en ce que** l'un au moins des deux éléments (1, 2) est précontraint par son emboîtement avec l'autre élément, suivant une direction de précontrainte perpendiculaire à la direction prévue des chocs.

8. Poutre selon la revendication 1, 2, 3, 4, 5, 6 ou 7, **caractérisée en ce qu**'entre les deux éléments assemblés, la poutre comporte un jeu dans la direction prévue des chocs.

9. Poutre selon la revendication 1, 2, 3, 4, 5, 6, 7 ou 8, **caractérisée en ce que** l'élément longitudinal de base (1) présente au moins une partie convexe et l'élément supplémentaire (2) présente au moins une partie concave apte à recevoir l'élément longitudinal de base ou au moins la partie convexe de celui-ci.

10. Poutre selon la revendication 9, **caractérisée en ce que** l'élément longitudinal de base (1) présente une section en forme de W et l'élément supplémentaire (2) présente une section en forme de U, l'élément complémentaire étant prévu pour coiffer l'élément longitudinal de base.

11. Poutre selon la revendication 1, 2, 3, 4, 5, 6, 7, 8, 9 ou 10, **caractérisée en ce qu**'elle comporte des moyens mécaniques destinés à empêcher l'élément externe de s'écarter lorsque l'assemblage des éléments emboîtés est soumis à une contrainte externe.

12. Poutre selon la revendication 11, **caractérisée en ce que** les moyens mécaniques sont une configuration géométrique des deux éléments (1, 2) telle que les positions relatives des deux éléments s'inversent au moins une fois entre deux sections transversales de la poutre.

13. Poutre selon la revendication 12, **caractérisée en ce que** la configuration géométrique des deux éléments est telle que les deux éléments sont alternativement élément interne et élément externe, considérés dans une section transversale de la poutre se déplaçant d'une extrémité à l'autre de cette dernière.

14. Poutre selon la revendication 12 ou 13, **caractérisée en ce qu**'entre deux sections dans lesquelles les positions relatives des deux éléments (1, 2) s'inversent, l'un au moins des éléments comporte des parties de transition (16, 17) formant des portées d'appui transversal, qui constituent un moyen de centrage des deux éléments (1, 2) emboîtés l'un par rapport à l'autre.

15. Pare-chocs de véhicule automobile comportant une poutre de pare-chocs selon l'une quelconque des revendications 1 à 14.

## Claims

1. A motor vehicle bumper beam, comprising a longitudinal base element (1) suitable for extending from one fixing point to another on the vehicle, comprising at least two longitudinal edges (7, 8), and an additional element (2), also comprising at least two longitudinal edges (12, 13), the two elements (1, 2) being suitable for engaging one in the other, **characterized in that** the two elements comprise snap-fastening means (9, 10, 11) for providing rigid mechanical connection between longitudinal edges (7, 8, 12, 13) of said two elements.

2. A beam according to claim 1, **characterized in that** the snap-fastening means are constituted by chamfered tabs (11) secured to a longitudinal edge (12, 13) of one of the elements (2), which tabs penetrate in orifices (10) provided on a longitudinal edge (7, 8) of the other element (1).

3. A beam according to claim 1 or claim 2, **characterized in that** it includes fixing points (5) at each end of the longitudinal base element (1) for fixing to the side rails of the vehicle.

4. A beam according to claim 1, 2, or 3, **characterized in that** the additional element (2) extends from one fixing point (5) to the other and has its own fixing points (17) for fixing to the vehicle.

5. A beam according to claim 1, 2, or 3, **characterized in that** the additional element (2) extends over only a limited fraction of the first element.

6. A beam according to claim 1, 2, 3, 4, or 5, **characterized in that** one or each of the two elements (1, 2) has reinforcing ribs (6, 19, 20).

7. A beam according to claim 1, 2, 3, 4, 5, or 6, **characterized in that** at least one of the two elements (1, 2) is prestressed by being engaged with the other element, the prestress being in a direction perpendicular to the expected impact direction.

8. A beam according to claim 1, 2, 3, 4, 5, 6, or 7, **characterized in that**, between the two assembled-together elements, the beam includes clearance in the expected impact direction.

9. A beam according to claim 1, 2, 3, 4, 5, 6, 7, or 8, **characterized in that** the longitudinal base element (1) presents at least one convex portion and the additional element (2) presents at least one concave portion suitable for receiving the longitudinal base element or at least the convex portion thereof.

10. A beam according to claim 9, **characterized in that** the longitudinal base element (1) presents a W-shaped section and the additional element (2) presents a channel section, the additional element being designed to fit over the longitudinal base element.

11. A beam according to claim 1, 2, 3, 4, 5, 6, 7, 8, 9, or 10, **characterized in that** it includes mechanical means for preventing the outer element from moving away when the assembly of the two inter-engaged elements is subjected to external stress.

12. A beam according to claim 11, **characterized in that** the mechanical means are constituted by a geometrical configuration of the two elements (1, 2) such that the relative positions of the two elements are reversed at least once between two cross-sections of the beam.

13. A beam according to claim 12, **characterized in that** the geometrical configuration of the two elements is such that these two elements alternate between being an inner element and an outer element, when considered in cross-section of the beam and on going from one end of the beam to the other.

14. A beam according to claim 12 or 13, **characterized in that** between two sections in which the relative positions of the two elements (1, 2) are reversed, at least one of the elements has transition portions (16, 17) forming transverse bearing surfaces, which surfaces constitute means for centering the two inter-engaged elements (1, 2) relative to each other.

15. A motor vehicle bumper including a bumper beam according to any one of claims 1 to 14.

## Patentansprüche

1. Stoßfängerträger eines Kraftfahrzeugs, das ein Basislängselement (1) umfasst, welches sich von einem Befestigungspunkt zu einem anderen Befestigungspunkt des Fahrzeugs erstrecken kann und mindestens zwei Längskanten (7, 8) sowie ein Zusatzelement (2) und außerdem mindestens zwei Längskanten (12, 13) aufweist, wobei sich die beiden Elemente (1, 2) zusammensetzen lassen, **dadurch gekennzeichnet, dass** die beiden Elemente Einrastmittel (9, 10, 11) umfassen, mit deren Hilfe eine starre mechanische Verbindung zwischen den beiden Längskanten (7, 8, 12, 13) erzielt wird.

2. Träger nach Anspruch 1, **dadurch gekennzeichnet, dass** die Einrastmittel aus abgeschrägten Zungen (11) bestehen, die mit einer Längskante (12, 13) eines der Elemente (2) fest verbunden sind, wobei die Zungen in Öffnungen (10) eingreifen, die an einer Längskante (7, 8) des anderen Elements (1) vorgesehen sind.

3. Träger nach Anspruch 1 oder 2, **dadurch gekennzeichnet, dass** er auf dem Basislängselement (1) und an jedem seiner äußeren Enden Befestigungspunkte (5) an den Längsträgern des Fahrzeugs aufweist.

4. Träger nach Anspruch 1, 2 oder 3, **dadurch gekennzeichnet, dass** sich das Zusatzelement von einem Befestigungspunkt (5) zum anderen erstreckt und seine eigenen Befestigungspunkt (21) am Fahrzeug aufweist.

5. Träger nach Anspruch 1, 2, oder 3, **dadurch gekennzeichnet, dass** das Zusatzelement (2) sich lediglich über einen begrenzten Abschnitt des ersten Elements erstreckt.

6. Träger nach Anspruch 1, 2, 3, 4 oder 5, **dadurch gekennzeichnet, dass** ein oder jedes der beiden Elemente (1, 2) Verstärkungsrippen (6, 19, 20) aufweist.

7. Träger nach Anspruch 1, 2, 3, 4, 5 oder 6, **dadurch gekennzeichnet, dass** mindestens eines der beiden Elemente (1, 2) durch das Zusammensetzen mit dem anderen Element in einer zur Richtung der voraussichtlichen Stöße senkrechten Vorspannrichtung vorgespannt ist.

8. Träger nach Anspruch 1, 2, 3, 4, 5, 6 oder 7, **dadurch gekennzeichnet, dass** der Träger in der Richtung der voraussichtlichen Stöße zwischen den beiden montierten Elementen ein Spiel aufweist.

9. Träger nach Anspruch 1, 2, 3, 4, 5, 6, 7 oder 8, **dadurch gekennzeichnet, dass** das Längsbasiselement (1) zumindest einen konvexen Abschnitt aufweist und das Zusatzelement (2) zumindest einen konkaven Abschnitt aufweist, in den das Längsbasiselement oder zumindest dessen konvexer Abschnitt hineinpasst.

10. Träger nach Anspruch 9 **dadurch gekennzeichnet, dass** das Längsbasiselement (1) einen W-förmigen Querschnitt aufweist und das Zusatzelement (2) einen U-förmigen Querschnitt aufweist, wobei das Zusatzelement zum Abdecken des Längsbasiselements vorgesehen ist.

11. Träger nach Anspruch 1, 2, 3, 4, 5, 6, 7, 8, 9 oder 10, **dadurch gekennzeichnet, dass** er mechanische Mittel aufweist, die verhindern sollen, dass sich das externe Element abspreizt, wenn die zusammengesetzten Elemente bei der Montage einer Belastung von außen ausgesetzt werden.

12. Träger nach Anspruch 11, **dadurch gekennzeichnet, dass** es sich bei den mechanischen Mitteln um eine geometrische Anordnung der beiden Elemente (1, 2) dergestalt handelt, dass sich die relativen Positionen der beiden Elemente mindestens ein Mal zwischen zwei Querschnitten des Trägers umkehren.

13. Träger nach Anspruch 12, **dadurch gekennzeichnet, dass** die geometrische Anordnung der beiden Elemente so gestaltet ist, dass die beiden Elemente abwechselnd ein inneres und ein äußeres Element darstellen, wenn man sie beim gedanklichen Durchlaufen eines Querschnitts des Trägers von einem äußeren Ende zum anderen äußeren Ende betrachtet.

14. Träger nach Anspruch 12 oder 13, **dadurch gekennzeichnet, dass** zwischen zwei Querschnitten, in denen sich die relativen Positionen der beiden Elemente (1, 2) umkehren, mindestens eines der Elemente Übergangsabschnitte (16, 17) aufweist und transversale Stützbereiche bildet, die ein Zentriermittel der beiden zusammengesetzten Elemente (1, 2) darstellen.

15. Stoßfänger für ein Kraftfahrzeug, der einen Stoßfängerträger nach einem der Ansprüche 1 bis 14 aufweist.
